# NEUE EUROPÄISCHE PATENTSCHRIFT

(11) **EP 2 748 885 B2**
(45) Veröffentlichungstag und Bekanntmachung des Hinweises auf die Entscheidung über den Einspruch: **24.07.2019**
(45) Hinweis auf die Patenterteilung: 30.09.2015
(21) Anmeldenummer: 12766601.4
(22) Anmeldetag: 23.08.2012
(51) Int. Cl.: H01M 16/00, H01M 8/04, H01M 8/06, H01M 8/0656, H01M 8/04082

(54) **ANORDNUNG UND VERFAHREN ZUR ENERGIEVERSORGUNG VON GEBÄUDEN**
ARRANGEMENT AND METHOD FOR SUPPLYING ENERGY TO BUILDINGS
SYSTÈME ET PROCÉDÉ POUR ALIMENTER DES BÂTIMENTS EN ÉNERGIE

(30) Priorität: 23.08.2011 DE 102011111565; 10.12.2011 DE 102011121704
(43) Veröffentlichungstag der Anmeldung: 02.07.2014
(73) Patentinhaber: Hydrogenious Technologies GmbH, 91058 Erlangen (DE)
(72) Erfinder: WASSERSCHEID, Peter, 91054 Erlangen (DE); ARLT, Wolfgang, 91058 Erlangen (DE)
(74) Vertreter: Rau, Schneck & Hübner Patentanwälte Rechtsanwälte PartGmbB
(86) Internationale Anmeldenummer: PCT/EP2012/066452
(87) Internationale Veröffentlichungsnummer: WO 2013/026910

(56) Entgegenhaltungen:
- EP-A1- 0 718 904
- EP-A2- 1 475 349
- US-A1- 2008 138 675
- US-A1- 2010 055 513

## Beschreibung

Die vorliegende Erfindung betrifft eine Anordnung zur Energieversorgung nach dem Oberbegriff des Anspruchs 1 und ein Verfahren zur Energieversorgung nach Anspruch 8.

Die US 2008/0 138 675 A1 offenbart ein Verfahren zur Erzeugung und Speicherung von Wasserstoff. Die US 2010/0 055 513 A1 offenbart ein System zur elektrochemischen Energieumwandlung und -speicherung.

Die Verwendung von Brennstoffzellen zur Gewinnung von elektrischem Strom durch Oxidation von Sauerstoff ist weitgehend bekannt und findet in den verschiedensten Bereichen Anwendung. Ein wesentlicher und kritischer Aspekt bei der Verwendung von Brennstoffzellen ist die Lagerung bzw. Speicherung von Wasserstoff, der bekanntlich in Gegenwart von Sauerstoff extrem explosiv ist.

Bisher sind eine Reihe von Wasserstoffspeicherverfahren untersucht worden: adsorptiv, absorptiv, als Flüssigkeit, als hochverdichtetes Gas. Der Nachteil aller Verfahren ist deren niedrige Energiedichte pro Volumen und die zum Teil hohen Kosten des Trägers.

Die bisher gängigen Verfahren der Lagerung von Wasserstoff als Flüssigkeit und unter Druck repräsentieren technische Lösungen, die so bisher insbesondere aufgrund des hohen technischen Aufwandes und den damit verbundenen relativ hohen Kosten nicht im öffentlich zugänglichen Bereich und schon gar nicht in einzelstehenden Gebäuden wie z.B. Privathäusern, Ferienhäusern, gewerblich genutzten Immobilien oder Produktionsgebäuden existieren.

So sind Behälter mit komprimierten Wasserstoff schwer zu dichten und Wasserstoff explodiert oder detoniert mit Druckwellen >1000 m/s in fast jeder Mischung von 4-75% mit Luft. Zudem ist die Mindestzündenergie niedriger als bei anderen gasförmigen Stoffen. Wasserstoff ist als hochentzündlich (F+) eingestuft und kann sich bei hohen Austrittsgeschwindigkeiten, wie auch im Fall von anderen Gasen, selbst entzünden. Der Formelumsatz bei der Explosion mit Luft ist mit 286 kJ/mol sehr hoch.

Es ist daher wünschenswert, eine Technologie für die Energieversorgung unter Verwendung von Brennstoffzellen bereitzustellen, die die Risiken des reinen Wasserstoffs vermeidet.

Alternative Speicherungsformen für Wasserstoff sind bekannt. So werden in der EP 1475349 A1 verschiedene aromatische Verbindungen, insbesondere kondensierte polycyclische Kohlenwasserstoffe beschrieben, die zur Verwendung als Wasserstoffspeicher einsetzbar sind. Die beschriebenen Substanzen werden hier insbesondere in mobilen Systemen eingesetzt.

Grundlage der Wirkungsweise von kondensierten polycyclischen Kohlenwasserstoffen, die über ein ausgedehntes π-konjugiertes Elektronensystem verfügen, ist deren Eigenschaft bei moderaten Temperaturen in Gegenwart eines geeigneten Katalysators einer Hydrierungsreaktion zu untergehen. Dabei wird Wasserstoff unter Sättigung der ungesättigten Doppelbindungen in die Substanz eingebaut (hydriert).

Der mittels Hydrierung eingebaute Wasserstoff kann im Folgenden in der Rückreaktion lediglich durch Temperaturerhöhung und/oder Reduzierung des Wasserstoffdruckes wieder aus dem hydrierten Produkt unter Regenerierung der aromatischen Substanz gewonnen werden.

Beispielhaft sei hier auf die Hydrierung / Dehydrierung von N-Ethylcarbazol (NEC) hingewiesen. Dabei wird N-Ethylcarbazol (NEC) als Edukt zur Perhydro-Form (H12-NEC) gemäß dem folgenden Reaktionsschema umgesetzt.

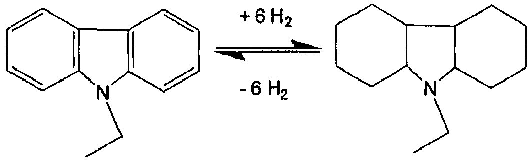

Die Speicherdichte für Wasserstoff ist dieser Reaktion volumenmäßig etwa doppelt so hoch wie in einem mit Wasserstoff gefüllten 700 bar Tank.

Die Energieversorgung durch Solarzellen ist zurzeit die attraktivste Möglichkeit für die regenerative Energieversorgung für einzelstehende Gebäude wie Privathäusern, Ferienhäuser, gewerblich genutzte Immobilien oder Produktionsgebäude. Keine andere Technologie erlaubt die erneuerbare Stromerzeugung mit einem variablen Leistungsbereich von wenigen Watt bis hin zu mehreren MW. Die Integration von Solarzellen in den Hausbereich ist eine gängige Technologie, und je nach Lage, Dachfläche und Ausrichtung sind Anlagen bis zu 30 kW Peak Leistung gängige Praxis.

Obwohl Solarzellen die attraktivste Form der erneuerbaren Stromerzeugung sind, hat diese Technologie den Nachteil, dass der produzierte Strom nicht über einen längeren Zeitraum zwischengespeichert werden kann - auch nicht in Batterien aufgrund der Speicherkosten und der geringen Kapazität - , sondern direkt verbraucht oder in das Netz eingespeist werden muss. Dies ist bedingt durch das Gesetz über erneuerbare Energien (EEG) für die Betreiber interessant, führt aber zu zusätzlichen Belastungen des ohnehin stark beanspruchten Stromnetzes.

Eine kostengünstige Möglichkeit photovoltaischen Strom mittelfristig, d.h. für einige Tage bis hin zu wenigen Wochen zu speichern ist daher ein essentieller Schritt, um ein weiteres Wachstum der photovoltaischen Stromerzeugung zu ermöglichen.

Die Erzeugung von Wasserstoff durch photovoltaischen Strom ist eine zurzeit häufig diskutierte Option.

Um einen hohen Wirkungsgrad des Gesamtsystems zu erreichen, ist eine effiziente Kopplung der Solarzellen mit dem Elektrolyseur, in welchem Wasser zu Wasserstoff und Sauerstoff aufgespalten wird, entscheidend. Hierbei ist abzuwägen, ob Spitzenströme vorteilhafter sind oder eher eine konstante Bestromung über längerem Zeitraum, dafür aber auf niedrigerem Niveau. Die Option eines schnellen Stromspeichers zum Ausgleich von Spitzen bzw. schnellen Abfällen z.B. bei Bewölkung mag ebenso entscheidend beitragen, wie die Auswahl der geeigneten Zelltechnologie, die zum Beispiel bei Teilbeschattungen nicht zu einer kompletten Abschaltung des Moduls führt.

Einige Vorschläge bzw. Modelle für die Kopplung der Photovoltaik mit der Erzeugung von Wasserstoff sind bekannt. So wird in der EP 718 904 A1 ein Brennstoffzellensystem beschrieben, bei dem es sich um ein komplettes, geschlossenes Ensemble handelt, und eine PEM-Brennstoffzelle und einen PEM-Elektrolyseur miteinander vereint. Damit wird die Forderung nach einem einfachen und kostengünstigen System erfüllt. Die Stromversorgung dieses Systems erfolgt mit Hilfe der zur Verfügung stehenden regenerativen Energiequellen, wie zum Beispiel Solar- und / oder Windenergie.

Der Aufbau des vorgeschlagenen Brennstoffzellensystems ermöglicht eine lange Lebensdauer und ist für einen kontinuierlichen 24-Stunden-Betrieb ausgelegt. Ziel ist eine möglichst einfache Bedienung und Wartungsfreiheit. Eine intelligente Steuerung regelt vollautomatisch den sofortigen Betriebsmoduswechsel von Wasserstoff-Produktion auf Stromproduktion. Dabei wird immer der optimale Arbeitspunkt der Kennlinie der regenerativen Energiequelle und der PEM-Brennstoffzelle / PEM-Elektrolyseurs berücksichtigt.

Der PEM-Elektrolyseur benötigt zum Betrieb destilliertes Wasser. Das System reguliert automatisch den von dem PEM-Elektrolyseur benötigten Wasserhaushalt aus einem dafür vorgesehenen Vorratsbehälter.

Das beschriebene Brennstoffzellsystem umfasst ebenfalls einen Wasserstoffspeicher, der in Form eines Metallhydridspeichers ausgebildet ist. Dieser Speicher ist aus spezifischen Metalllegierungen hergestellt und ermöglicht die Zwischenspeicherung von gasförmigem Wasserstoff. Der Metallhydridspeicher kann mit Wasserstoff in der Nähe des Umgebungsdruckes befüllt werden.

Die Verwendung von Metallhydridspeichern als Wasserstoffspeicher ist jedoch für die Anwendung in Privathaushalten wenig geeignet. Sie sind teuer, oft ineffizient und besitzen eine Reihe intrinsischer Sicherheitsprobleme.

Es besteht somit der Bedarf nach einer Energieversorgung für einzelstehende Gebäude wie z.B. private Häuser, die sich in lediglich lose bebauten Gegenden befinden, die autark und unabhängig ist.

Diese Aufgabe wird erfindungsgemäß durch eine Anordnung mit den Merkmalen des Anspruchs 1 und ein Verfahren mit den Merkmalen des Anspruchs 7 gelöst.

Demnach umfasst die Anordnung zur Energieversorgung von Gebäuden, insbesondere von einzelnstehenden, isolierten Gebäuden wie Privathäuser, Ferienhäuser, gewerblich genutzten Immobilien oder Produktionsgebäuden,
- mindestens eine energieerzeugende Anlage, insbesondere eine photovoltaische Anlage, zur Bereitstellung eines elektrischen Stroms,
- mindestens einen Elektrolyseur zur Herstellung von Wasserstoff aus Wasser unter Verwendung des elektrischen Stroms aus der energieerzeugenden Anlage,
- mindestens einen ersten chemischen Reaktor zur mindestens teilweisen Hydrierung von mindestens einem Substrat mit einem ausgedehnten [tau][tau]-konjugierten System unter Verwendung des in dem Elektrolyseur gebildeten Wasserstoffs,
- mindestens einen Speichertank zur Speicherung des im ersten chemischen Reaktor zumindest teilweise hydrierten Substrates,
- mindestens einen zweiten chemischen Reaktor zur mindestens teilweisen Dehydrierung des in dem ersten chemischen Reaktor hergestellten und im Speichertank gespeicherten zumindest teilweise hydrierten Substrates unter Freisetzung von Wasserstoff, und
- mindestens eine Brennstoffzelle zur Oxidation des in dem zweiten chemischen Reaktor freigesetzten Wasserstoffs unter Freisetzung von Energie

Es werden somit folgende Funktionselemente für die Energieversorgung von einzelstehenden Gebäuden miteinander gekoppelt bzw. kombiniert:
- solare Energieerzeugung;
- Wasserstofferzeugung durch Elektrolyse,
- effizienter, sicherer und kostengünstiger Wasserstoffspeicher für die verlustfreie mittelfristige Speicherung;
- Brennstoffzelle zur Rückverstromung des Wasserstoffes, und
- Nutzung der exothermen Hydrierung und der Exothermie der Brennstoffzelle zur Bereitstellung von Wärme und elektrischen Strom im Haus zur Wirkungsgraderhöhung.

Eine Erzeugung von Niederdruck-Wasserstoff in konventionellen Elektrolyseuren und sofortige Umwandlung des Wasserstoffs via Hydrierung von geeigneten Verbindungen ist eine hoch interessante und relevante Alternative, die die Schwierigkeiten der Wasserstoffspeicherung umgehen, aber nach wie vor die Kopplung mit der Photovoltaik erlauben. Durch die Rückwandlung der Wasserstoffs und Umwandlung mittels einer Brennstoffzelle lässt sich so ein geschlossener Stromkreislauf darstellen.

Die vorliegende Anordnung ermöglicht somit die Sicherstellung des autonomen Ganzjahresbetriebes eines Hauses und/oder seine Zwischenspeicherkapazität für Überschuss-Elektrizität auf Basis der derzeitig üblichen Infrastruktur z.B. unter Verwendung eines Öltankes.

Mittels der vorliegenden Anordnung wird ein energiearmes Substrat in seine energiereiche Form überführt, in dem z.B. aus Sonnenlicht mittels Photovoltaik, aber auch aus anderen geeigneten erneuerbaren Energiequellen, elektrische Energie erzeugt wird, die wiederum zur Erzeugung von Wasserstoff und Sauerstoff unter Aufspaltung von Wasser verwendet wird. Der gebildete Wasserstoff wird dann zur Hydrierung der energiearmen Form des verwendeten Kohlenwasserstoffs zur energiereichen Form eingesetzt. Besonders geeignete energiearme Substrate sind polyzyklische, aromatische Verbindungen mit einem ausgedehnten π-Elektronensystem, die bei Hydrierung die jeweiligen gesättigten, polyzyklischen Verbindungen bilden. Die Hydrierung ist exotherm und die während der Hydrierung entstandene Wärme kann in einem Heizsystem z.B. im Haus genutzt werden. In Zeiten fehlender Sonneneinstrahlung wird die energiereiche Form des Kohlenwasserstoffs in die energiearme Form unter Wasserstoffproduktion zurückverwandelt, der in einer Brennstoffzelle elektrische Energie und Wärme erzeugt.

Der Vorteil der vorliegenden Anordnung und des im Weiteren beschriebenen Verfahrens besteht darin, dass ein einzelstehendes Gebäude wie z.B. ein privates Haus unter Verwendung von erneuerbarer Energie wie z.B. Photovoltaik aber auch Windenergie autark betrieben werden kann. Mit anderen Worten, der Energiebedarf und die Energieversorgung können autark und unabhängig von weiteren Energiequellen und damit einem Stromnetz gedeckt werden. Ein weiterer Vorteil besteht darin, dass der für die Energieerzeugung wesentliche Faktor Wasserstoff im Gegensatz zu bisher bekannten Verfahren und Modellen nicht in großen Mengen vorhanden sein muss, sondern in einer chemischen Substanz sicher und drucklos in einer vorhandenen Infrastruktur zeitlich unlimitiert gespeichert werden kann.

In einer bevorzugten Ausführungsform ist der mindestens eine Elektrolyseur mit der mindestens einen Brennstoffzelle über den ersten chemischen Reaktor, den Speichertank und den zweiten chemischen Reaktor verbunden. Somit bilden die einzelnen Komponenten bzw. Bestandteile der vorliegenden Anordnung ein in sich verbundenes System zur Energieerzeugung und -speicherung. Die einzelnen Zellen und Reaktoren der vorliegenden Anordnung sind mit geeigneten Verbindungsleitungen zur Überführung von Wasserstoff sowie der energiearmen bzw. energiereichen Form des aromatischen Kohlenwasserstoffes verbunden. Die Leitungen für den Wasserstofftransport sind bevorzugt aus gasdichten und druckfesten Materialien hergestellt.

Es ist bevorzugt, dass das mindestens eine energiearme Substrat mit einem ausgedehnten π-konjugierten System ausgewählt ist aus einer Gruppe enthaltend polycyclische aromatische Kohlenwasserstoffe, polycyclische heteroaromatische Kohlenwasserstoffe, π-konjugierte organische Polymere oder eine Kombination davon.

In einer Ausführungsform ist das mindestens eine energiearme Substrat mit einem ausgedehnten π-konjugierten System ausgewählt aus einer Gruppe enthaltend kondensierte heteroaromatische Kohlenwasserstoffe mit N, S oder als O Heteroatom, wobei die Heteroatome substituiert oder unsubstituiert vorliegen. Dabei sind die kondensierten heteroaromatischen Kohlenwasserstoffe bevorzugterweise Ringsysteme mit C6 bis C30, bevorzugt C8 bis C20, insbesondere C12.

In einer weiteren bevorzugten Ausführungsform sind die Heteroatome der kondensierten Kohlenwasserstoffe mit mindestens einer Alkylgruppe, mindestens einer Arylgruppe, mindestens einer Alkenylgruppe, mindestens einer Alkinylgruppe, mindestens einer Cycloalkylgruppe und/oder mindestens einer Cycloalkenylgruppe substituiert, wobei Substitutionen der Heteroatome mit C₁-C₃₀-Alkyl, bevorzugt C₁-C₁₀-Alkyl, insbesondere mit C₂-C₅-Alkyl vorteilhaft sind und weitere Heteroatome enthalten sein können.

In einer besonders bevorzugten Ausführungsform wird als energiearmes Substrat geeignet zur Speicherung von Wasserstoff N-Ethylcarbazol, N-n-Propylcarbazol oder N-iso-propylcarbazol verwendet.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C≡C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

Der Begriff "Cycloalkenyl" umfasst die Gruppen Cyclopentenyl, Cyclohexenyl, Cycloheptenyl und Cyclooctenyl.

Es ist von Vorteil, wenn das energiearme Substrat mit einem ausgedehnten π-konjugierten System in dem ersten chemischen Reaktor bei einer Temperatur zwischen 50 und 180°C, bevorzugt 80 und 150°C und einem Druck zwischen 2 und 200 bar, bevorzugt 10 bis 100 bar in Gegenwart eines geeigneten Edelmetallkatalysators zumindest teilweise hydriert wird. Besonders geeignete Katalysatoren für die Hydrierung des energiearmen Substrats enthalten das Element Ruthenium.

In einer weiteren Ausführungsform wird als Brennstoffzelle eine Niedertemperatur-Polymer-Elektrolytmembran-Brennstoffzelle (PEM) verwendet. Diese Brennstoffzellen können nicht nur in ihrer eigentlichen Funktion zur Wasserstoffoxidation verwendet werden, wobei der für die Wasserstoffoxidation benötigte Sauerstoff aus der Luft bezogen wird, sondern können in umgekehrter Funktion ebenfalls als Elektrolyseur betrieben werden, wobei das für die Elektrolyse benötigte Wasser allein aus der Luftfeuchte bezogen wird. Hierbei ist es aber auch möglich, dass das benötigte Wasser aus der Brennstoffzelle recycelt wird oder einem Tank entnommen wird. Somit wird der mindestens eine Elektrolyseur bevorzugt als eine umgekehrt betriebene Niedertemperatur-Polymer-Elektrolytmembran-Brennstoffzelle (PEM) betrieben.

In dem mindestens einen Elektrolyseur ist mindestens ein wasserspeicherndes Medium angeordnet.

Der bevorzugt zum Einsatz kommende Speichertank für die Zwischenspeicherung der energiereichen und ggf. energiearmen Form des verwendeten Kohlenwasserstoffs weist die Konfiguration und Aufbau von üblicherweise zum Einsatz kommenden konventionellen Heizöltanks auf.

Die vorliegende Anordnung ermöglicht die Durchführung eines Verfahrens zur Energieversorgung von einzelstehenden Gebäuden unter Verwendung der obigen Anordnung mit den folgenden Schritten:
- Bereitstellen eines elektrischen Stroms, bevorzugt eines Gleichstroms, aus mindestens einer erneuerbaren Energiequelle, insbesondere einer photovoltaischen Anlage oder Windradanlage,
- Herstellen von Wasserstoff aus Wasser in mindestens einem Elektrolyseur unter Verwendung des elektrischen Stroms aus der mindestens einen erneuerbaren Energiequelle und ggf. Nutzung der dabei entstehenden Wärme z.B. zur Bereitung von Warmwasser,
- Überführen des gebildeten Wasserstoffes aus dem mindestens einen Elektrolyseur in einen ersten chemischen Reaktor enthaltend mindestens einem Substrat mit einem ausgedehnten π-konjugierten System und mindestens teilweise Hydrierung des Substrates,
- Überführen des zumindest teilweise hydrierten Substrates aus dem ersten chemischen Reaktor in mindestens einen Speichertank und ggf. Speicherung des zumindest teilweise hydrierten Substrates in dem Speichertank,
- Überführen des zumindest teilweise hydrierten Substrates aus dem Speichertank in mindestens einen zweiten chemischen Reaktor und Dehydrierung des zumindest teilweise hydrierten Substrates in dem zweiten chemischen Reaktor unter Freisetzung von Wasserstoff, und
- Überführen des Wasserstoffs aus dem zweiten chemischen Reaktor in mindestens eine Brennstoffzelle und Oxidation des Wasserstoffs und in der Brennstoffzelle vorhandenen Sauerstoffs zu Wasser bei gleichzeitiger Freisetzung von Energie in Form von elektrischen Strom und Wärme.

In einer Ausführungsform des vorliegenden Verfahrens wird der in dem Elektrolyseur erzeugte Wasserstoff ohne Zwischenspeicherung zur zumindest teilweisen Hydrierung des mindestens einen Substrates mit einem ausgedehnten π-konjugierten System im ersten chemischen Reaktor verwendet. Der zumindest teilweise zu hydrierende Kohlenwasserstoff liegt im ersten chemischen Reaktor bevorzugt in flüssiger Form vor. Es wäre jedoch auch denkbar, Kohlenwasserstoffe in festem Aggregatzustand zu verwenden.

Des Weiteren ist es von Vorteil, wenn die bei der zumindest teilweisen Hydrierung des mindestens einen Substrates mit einem ausgedehnten π-konjugierten System im ersten chemischen Reaktor entstehende Wärme in ein Heizsystem der einzelstehenden Einrichtung bzw. Gebäudes eingeschleust wird. Das zumindest teilweise hydrierte Substrat mit einem ausgedehnten π-konjugierten System im zweiten chemischen Reaktor unter Wärmezufuhr dehydriert. Die für die Dehydrierung notwendige Wärme stammt bevorzugt aus dem Heizsystem des einzelstehenden Gebäudes, kann jedoch auch bei Bedarf aus einer weiteren, externen Quelle wie z.B. direkte Sonneneinstrahlung zugeführt werden. Anschließend wird das im zweiten chemischen Reaktor dehydrierte Substrat aus dem zweiten chemischen Reaktor über den Speichertank in den Elektrolyseur rückgeführt. Es erfolgt also ein vollständiges Recycling der verwendeten Substanzen. Da das verwendete Substrat nicht verbraucht wird, können sehr lange Gebrauchszeiten bzw. eine große Anzahl von Recycling-Zyklen angestrebt werden.

Das in der Brennstoffzelle während der Wasserstoffoxidation gebildete Wasser wird in den Elektrolyseur überführt-. Es ist ebenfalls vorstellbar, dass das in der Brennstoffzelle gebildete Wasser lediglich teilweise recycelt wird.

Die in der Brennstoffzelle und in dem als Hydrierreaktor fungierenden ersten chemischen Reaktor freigesetzte Wärme wird bevorzugt in das Heizsystem und der freigesetzte elektrische Strom in das elektrische Netz des einzelstehenden Gebäudes eingeleitet. Es wird also eine gleichmäßige und konstante Wärme- und Stromversorgung auch bei schwankenden äußeren Bedingungen wie unterschiedliche Sonneneinstrahlung mit dem vorliegenden Verfahren gewährleistet. Es ist ebenfalls denkbar, die erzeugte Energie z.B. den elektrischen Strom aus mindestens einer erneuerbaren Energiequelle nach außen an externe Stromnetze zur Stabilisierung der Stromnetze abzugeben. Es kann zudem lukrativ sein, zu Zeiten, wo Elektrizität billig oder gar mit negativen Preisen belastet ist, diese zusätzlich zu der mindestens einen erneuerbaren Energiequelle oder allein in das System aufzunehmen, und zu Zeiten, wo Elektrizität sehr teuer ist, diese nach extern abzugeben.

Der für die Wasserstoffoxidation in der Brennstoffzelle benötigte Sauerstoff wird bevorzugt von außen, d.h. außerhalb des Gebäudes, in die Brennstoffzelle in Form von Luft oder reinem Sauerstoff zugeführt. Somit ist die Installation von sauerstofferzeugenden Geräten nicht notwendig. Es ist aber auch denkbar, den im Elektrolyseur während der Wasserhydrolyse gebildeten Sauerstoff unmittelbar in die Brennstoffzelle einzuleiten.

Die Erfindung wird nachfolgend unter Bezugnahme auf die Figuren der Zeichnungen an mehreren Ausführungsbeispielen näher erläutert. Es zeigen:

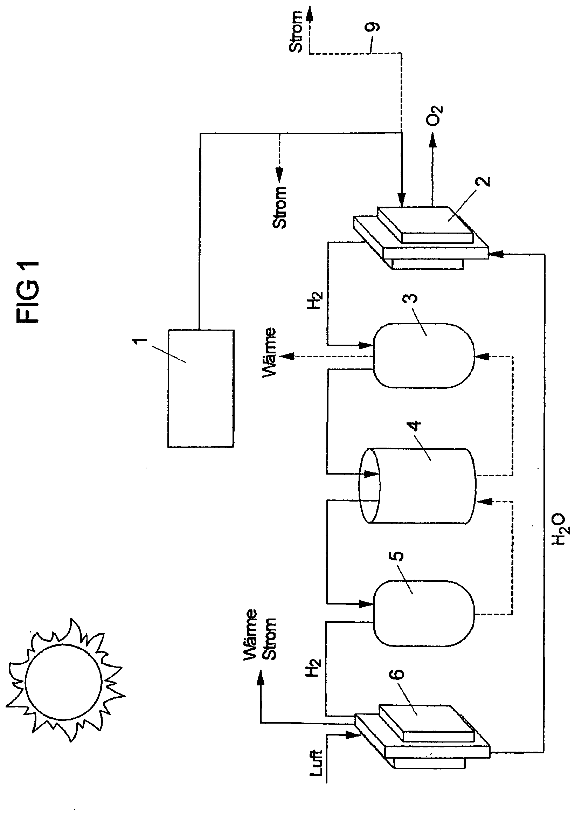

- Figur 1: eine schematische Darstellung einer Ausführungsform der erfindungsgemäßen Anordnung.

In Figur 1 ist eine bevorzugte Ausführungsform der erfindungsgemäßen Anordnung schematisch dargestellt.

Als Energiequelle bzw. energieerzeugende Anlage 1 wird eine photovoltaische Anlage bevorzugt mit mehreren auf dem Dach eines Gebäudes angeordneten Solarzellenpaneelen verwendet. Diese Paneele sollten bevorzugt so angeordnet sein, dass eine größtmögliche Ausbeute der Sonneneinstrahlung gewährleistet ist. Die photovoltaische Anlage 1 ermöglicht ebenfalls die Erzeugung von Gleichstrom, mit welchem risikolos Wasserstoff produziert werden kann.

Der produzierte Gleichstrom wird in einen Elektrolyseur 2 z.B. einen PEM-Elektrolyseur eingeführt, der in Form einer rückwärts als Elektrolysezelle arbeitenden PEM-Brennstoffzelle ausgeführt ist. Diese Doppelfunktion der Brennstoffzelle vereinfacht und verbilligt die Anlage. Ebenfalls ist es möglich anstatt eines PEM-Elektrolyseurs eine käufliche Elektrolysezelle und eine separate Brennstoffzelle einzusetzen.

Die Elektrolyse verläuft exotherm und die während der Elektrolyse entstandene Wärme kann in einem Privathaus sofort z.B. für die Warmwasserversorgung verwendet werden kann. Insofern ist der Wirkungsgrad der verwendeten Elektrolysezellen nicht entscheidend.

Der erzeugte Wasserstoff wird sofort ohne Zwischenspeicherung zur Hydrierung von N-Ethylcarbazol bzw. seinem teilhydrierten energiereichen Pendants benutzt. Dazu wird der Tankinhalt durch einen chemischen Reaktor 3 gepumpt und teilhydriert. Eine Vollhydrierung ist möglich aber nicht notwendig.

Bei der Energieentnahme wird der (teil)-hydrierte Inhalt des Speichertankes 4 durch einen endotherm arbeitenden Dehydrierreaktor 5 geführt und dabei Wasserstoff freigesetzt. Dieser wird in der Brennstoffzelle 6 z.B. einer PEM-Brennstoffzelle in Elektrizität, Wasser und Wärme gewandelt. Das Wasser steht ggf. zur Elektrolyse bereit, die Wärme dient zur Heizung des Dehydrierreaktors und zur Hauswärmeversorgung.

Figur 1 zeigt zudem einen externen Stromanschluss 9, mit dem die Einspeisung vom externem Strom möglich ist. Der externe Anschluss 9 ermöglicht zudem die Rückspeisung von überschüssiger Energie in das Stromnetz.

### Ausführungsbeispiel

Die Grundlage bildet ein 120qm Haus, das nach ENEV 2012 gebaut ist und einen Jahresheizbedarf von 30 kWh/qm und Warmwasserbedarf von 12,5, in Summe 42,5 kWh/qm, aufweist.

Mit einem Heizwert des Wasserstoffs in Perhydro-N-Ethylcarbazol ergibt sich ein Jahresvolumen von 2400 Litern=5100 kWh/a energiearmen Stoffes, also die heutige Tankgröße einer Ölheizung. Hinzu kommt ein elektrischer Bedarf von 4065 kWh, so dass der Gesamtenergiebedarf 9165 kWh/a ist.

Rechnet man 1 qm Solarpanel mit 100 W und einer Volllastzeit von 1000 h, ergeben sich 100 kWh/qm oder für 9165 kWh 92 qm Solarpanel zur ganzjährigen Energiebereitstellung.

Damit ist gezeigt, dass überschlägig ein Einfamilienhaus mit 92 qm Solarzellen und einem 2400 Liter Speichertank autark sein kann.

## Patentansprüche

1. Anordnung zur Energieversorgung von Gebäuden umfassend
- mindestens eine energieerzeugende Anlage (1), zur Bereitstellung eines elektrischen Stroms,
- mindestens einen Elektrolyseur (2) zur Herstellung von Wasserstoff aus Wasser unter Verwendung des elektrischen Stroms aus der energieerzeugenden Anlage (1),
- mindestens eine Brennstoffzelle (6) zur Oxidation des in dem zweiten chemischen Reaktor (4) freigesetzten Wasserstoffs unter Freisetzung von Energie,
**dadurch gekennzeichnet, dass**
- mindestens ein erster chemischer Reaktor (3) zur mindestens teilweisen Hydrierung von mindestens einem Substrat mit einem ausgedehnten π-konjugierten System unter Verwendung des in dem Elektrolyseur (2) gebildeten Wasserstoffs vorgesehen ist,
- mindestens ein Speichertank (4) zur Speicherung des im ersten chemischen Reaktor (3) zumindest teilweise hydrierten Substrates vorgesehen ist,
- mindestens ein zweiter chemischer Reaktor (5) zur mindestens teilweisen Dehydrierung des in dem ersten chemischen Reaktor (3) hergestellten und im Speichertank (4) gespeicherten zumindest teilweise hydrierten Substrates unter Freisetzung von Wasserstoff vorgesehen ist,
- eine Wärmeübertragungs-Vorrichtung zur Übertragung von in dem ersten chemischen Reaktor (3) entstehender Wärme in ein Heizsystem (7) des Gebäudes und/oder zur Übertragung von für die Dehydrierung in dem zweiten chemischen Reaktor (5) notwendiger Wärme aus dem Heizsystem (7) des Gebäudes vorgesehen ist,
- in dem mindestens einen Elektrolyseur (2) mindestens ein wasserspeicherndes Medium angeordnet ist.

2. Anordnung nach Anspruch 1, **dadurch gekennzeichnet, dass** das mindestens eine Substrat mit einem ausgedehnten π-konjugierten System ausgewählt ist aus einer Gruppe enthaltend polycyclische aromatische Kohlenwasserstoffe, polycyclische heteroaromatische Kohlenwasserstoffe, π-konjugierte organische Polymere oder eine Kombination davon.

3. Anordnung nach einem der vorhergehenden Ansprüche, **dadurch gekennzeichnet, dass** das mindestens eine Substrat mit einem ausgedehnten π-konjugierten System ausgewählt ist aus einer Gruppe enthaltend kondensierte heteroaromatische Kohlenwasserstoffe mit N, S oder als O Heteroatom, wobei die Heteroatome substituiert oder unsubstituiert vorliegen.

4. Anordnung nach einem der vorhergehenden Ansprüche, **dadurch gekennzeichnet, dass** als Substrat mit einem ausgedehnten π-konjugierten System N-Ethylcarbazol, N-n-Propylcarbazol, N-iso-propylcarbazol verwendet werden.

5. Anordnung nach einem der vorhergehenden Ansprüche, **dadurch gekennzeichnet, dass** das Substrat mit einem ausgedehnten π-konjugierten System in dem ersten chemischen Reaktor (3) bei einer Temperatur zwischen 50 und 180°C und einem Druck zwischen 2 und 200 bar in Gegenwart eines geeigneten Katalysators zumindest teilweise hydriert wird.

6. Anordnung nach einem der vorhergehenden Ansprüche, **dadurch gekennzeichnet, dass** die mindestens eine Brennstoffzelle (6) eine Niedertemperatur-Polymer-Elektrolytmembran-Brennstoffzelle (PEM) ist.

7. Verfahren zur Energieversorgung eines Gebäudes unter Verwendung einer Anordnung gemäß einer der vorhergehenden Ansprüche umfassend die Schritte
- Bereitstellen eines elektrischen Stroms aus mindestens einer erneuerbaren Energiequelle (1),
- Herstellen von Wasserstoff aus Wasser in mindestens einem Elektrolyseur (2) unter Verwendung des elektrischen Stroms aus der mindestens einen erneuerbaren Energiequelle (1),
- Überführen des gebildeten Wasserstoffes aus dem mindestens einen Elektrolyseur (2) in einen ersten chemischen Reaktor (3) enthaltend mindestens einem Substrat mit einem ausgedehnten π-konjugierten System und mindestens teilweise Hydrierung des Substrates,
- Überführen des zumindest teilweise hydrierten Substrates aus dem ersten chemischen Reaktor (3) in mindestens einen Speichertank (4) und gegebenenfalls Speicherung des zumindest teilweise hydrierten Substrates in dem Speichertank (4),
- Überführen des zumindest teilweise hydrierten Substrates aus dem Speichertank (4) in mindestens einen zweiten chemischen Reaktor (5) und Dehydrierung des zumindest teilweise hydrierten Substrates in dem zweiten chemischen Reaktor (5) unter Freisetzung von Wasserstoff,
- Überführen des Wasserstoffs aus dem zweiten chemischen Reaktor (5) in mindestens eine Brennstoffzelle (6) und Oxidation des Wasserstoffs und in der Brennstoffzelle vorhandenen Sauerstoffs zu Wasser bei gleichzeitiger Freisetzung von Energie in Form von elektrischem Strom und Wärme,
- Einschleusen von bei der zumindest teilweisen Hydrierung des mindestens einen Subtrates mit einem ausgedehnten π-konjugierten System im ersten chemischen Reaktor (3) entstehender Wärme gein das Heizsystem (7) des Gebäudes und/oder Verwenden von für die Dehydrierung in dem zweiten chemischen Reaktor (5) notwendigen Wärme aus dem Heizsystem (7) des Gebäudes
- wobei das in der Brennstoffzelle (6) während der Wasserstoffoxidation gebildete Wasser in den Elektrolyseur (2) überführt wird.

8. Verfahren nach Anspruch 7, **dadurch gekennzeichnet, dass** der in dem Elektrolyseur erzeugte Wasserstoff ohne Zwischenspeicherung zur zumindest teilweisen Hydrierung des mindestens einen Substrates mit einem ausgedehnten π-konjugierten System im ersten chemischen Reaktor (3) verwendet wird.

9. Verfahren nach einem der Ansprüche 7 und 8, **dadurch gekennzeichnet, dass** das im zweiten chemischen Reaktor (5) dehydrierte Substrat aus dem zweiten chemischen Reaktor (5) über den Speichertank (4) in den Elektrolyseur (2) rückgeführt wird.

10. Verfahren nach einem der Ansprüche 7 bis 9, **dadurch gekennzeichnet, dass** der in der Brennstoffzelle (6) freigesetzte elektrische Strom in das elektrische Netz (8) des Gebäudes oder in ein externes Stromnetz (9) eingeleitet wird.

11. Verfahren nach einem der Ansprüche 78 bis 10, **dadurch gekennzeichnet, dass** der zur Wasserstoffoxidation in der Brennstoffzelle (6) benötigte Sauerstoff außen in die Brennstoffzelle (6) in Form von Luft zugeführt wird.

12. Verfahren nach einem der Ansprüche 7 bis 11, **dadurch gekennzeichnet, dass** bei Bedarf zusätzlicher elektrischer Strom von einer weiteren Energiequelle (9) in das elektrische Netz (8) des Gebäudes eingespeist wird.

13. Verfahren nach einem der Ansprüche 7 bis 11, **dadurch gekennzeichnet, dass** bei Bedarf zusätzlicher elektrischer Strom aus der Brennstoffzelle (6) in das externe elektrische Netz (8) rückgespeist wird.

## Claims

1. Arrangement for supplying energy to buildings, comprising:
- at least one energy generating installation (1) for providing an electrical current,
- at least one electrolyser (2) for generating hydrogen from water using the electrical current from the energy generating installation (1),
- at least one fuel cell (6) for the oxidation of the hydrogen released in the second chemical reactor (4) with the release of energy,
**characterized in that**
- at least one first chemical reactor (3) is provided for at least partially hydrogenating at least one substrate with an extended π-conjugated system using the hydrogen generated in the electrolyser (2),
- at least one storage tank (4) is provided for storing the substrate hydrogenated at least partially in the first chemical reactor (3),
- at least one second chemical reactor (5) is provided for at least partially dehydrogenating the at least partially hydrogenated substrate generated in the first chemical reactor (3) and stored in the storage tank (4) with the release of hydrogen,
- a heat transmission device is provided for transmitting heat generated in the first chemical reactor (3) into a heating system (7) of the building and/or for transmitting heat required for the dehydrogenation in the second chemical reactor (15) from the heating system (7) of the building,
- at least one water storing medium is arranged in the at least one electrolyser (2).

2. Arrangement according to claim 1, **characterized in that** the at least one substrate with an extended π-conjugated system is selected from a group containing polycyclic aromatic hydrocarbons, polycyclic heteroaromatic hydrocarbons, π-conjugated organic polymers or a combination thereof.

3. Arrangement according to one of the preceding claims, **characterized in that** the at least one substrate with an extended π-conjugated system is selected from a group containing condensed heteroaromatic hydrocarbons with N, S or O as a hetero atom, wherein the hetero atoms can be substituted or non-substituted.

4. Arrangement according to one of the preceding claims, **characterized in that** N-ethylcarbazol, N-n-propylcarbazol, N-iso-propylcarbazol are used as a substrate with an extended π-conjugated system.

5. Arrangement according to one of the preceding claims, **characterized in that** the substrate with an extended π-conjugated system is at least partially hydrogenated in the first chemical reactor (3) at a temperature between 50 and 180° Celsius and a pressure between 2 and 200 bar in the presence of a suitable catalyst.

6. Arrangement according to one of the preceding claims, **characterized in that** the at least one fuel cell (6) is a low temperature polymer electrolyte membrane fuel cell (PEM).

7. Method for the energy supply of a building using an arrangement according to one of the preceding claims, comprising the steps
- providing an electrical current from at least one renewable energy source (1),
- generating hydrogen from water in at least one electrolyser (2) using the electrical current from the at least one renewable energy source (1),
- transferring the generated hydrogen from the at least one electrolyser (2) into a first chemical reactor (3) containing at least one substrate with an extended π-conjugated system and at least partially hydrogenating the substrate,
- transferring the at least partially hydrogenated substrate from the first chemical reactor (3) into at least one storage tank (4) and optionally storing the at least partially hydrogenated substrate in the storage tank (4),
- transferring the at least partially hydrogenated substrate from the storage tank (4) into at least one second chemical reactor (5) and dehydrogenating the at least partially hydrogenated substrate in the second chemical reactor (5) by releasing hydrogen,
- transferring the hydrogen from the second chemical reactor (5) into at least one fuel cell (6) and oxidation of the hydrogen and of oxygen present in the fuel cell to water with simultaneous release of energy in form of electrical current and heat,
- passing heat generated during the at least partial hydrogenation of the at least one substrate with an extended π-conjugated system in the first chemical reactor (3) into the heating system (7) of the building and/or using heat required for the dehydrogenation in the second chemical reactor (5) from the heating system of the building (7),
- wherein the water formed in the fuel cell (6) during the hydrogen oxidation is transferred to the electrolyser (2).

8. Method according to claim 7, **characterized in that** the hydrogen generated in the electrolyser is used without intermediate storage for the at least partial hydrogenation of the at least one substrate with an extended π-conjugated system in the first chemical reactor (3).

9. Method according to one of claims 7 and 8, **characterized in that** the substrate dehydrogenated in the second chemical reactor (5) is recirculated from the second chemical reactor (5) via the storage tank (4) to the electrolyser (2).

10. Method according to one of claims 7 to 9, **characterized in that** the electrical current released in the fuel cell (6) is passed into the electrical network (8) of the building or into an external grid (9).

11. Method according to one of claims 7 to 10, **characterized in that** the oxygen required for hydrogen oxidation in the fuel cell (6) is fed from outside into the fuel cell (6) in form of air.

12. Method according to one of claims 7 to 11, **characterized in that** additional electrical current is fed into the electrical network (8) of the building from a further energy source (9) if required.

13. Method according to one of claims 7 to 11, **characterized in that** additional electrical current is fed back into the external electrical network (8) from the fuel cell (6) if required.

## Revendications

1. Système pour alimenter des bâtiments en énergie comprenant
- au moins une installation (1) de production d'énergie pour la mise à disposition de courant électrique,
- au moins un électrolyseur (2) pour la fabrication d'hydrogène à partir d'eau, moyennant l'emploi du courant électrique provenant de l'installation (1) de production d'énergie,
- au moins une pile à combustible (6) pour l'oxydation de l'hydrogène libéré dans le deuxième réacteur chimique (4), moyennant une libération d'énergie,
**caractérisé en ce**
- **qu'**au moins un premier réacteur chimique (3) est prévu pour l'hydrogénation au moins partielle d'au moins un substrat avec un système conjugué π étendu, moyennant l'emploi de l'hydrogène formé dans l'électrolyseur (2),
- **qu'**au moins un réservoir de stockage (4) est prévu pour le stockage du substrat hydrogéné au moins partiellement dans le premier réacteur chimique (3),
- **qu'**au moins un deuxième réacteur chimique (5) est prévu pour la déshydrogénation au moins partielle du substrat au moins partiellement hydrogéné fabriqué dans le premier réacteur chimique (3) moyennant une libération d'hydrogène et stocké dans le réservoir de stockage (4),
- **qu'**un dispositif de transfert de chaleur est prévu pour le transfert de la chaleur produite dans le premier réacteur chimique (3) vers un système de chauffage (7) du bâtiment et/ou pour le transfert de la chaleur nécessaire pour la déshydrogénation dans le deuxième réacteur chimique (5) à partir du système de chauffage (7) du bâtiment,
- **qu'**au moins un milieu rétenteur d'eau est disposé dans l'au moins un électrolyseur (2).

2. Système selon la revendication 1, **caractérisé en ce que** l'au moins un substrat avec un système conjugué π étendu est choisi dans le groupe comportant des hydrocarbures aromatiques polycycliques, des hydrocarbures hétéro aromatiques polycycliques, des polymères organiques conjugués π ou une combinaison de ceux-ci.

3. Système selon l'une des revendications précédentes, **caractérisé en ce que** l'au moins un substrat avec un système conjugué π étendu est choisi dans un groupe comportant des hydrocarbures hétéro- aromatiques condensés avec N, S ou O en tant qu'hétéro- atome, où les hétéro-atomes sont présents substitués ou non substitués.

4. Système selon l'une des revendications précédentes, **caractérisé en ce que** du N-éthylcarbazol, du N-n-propylcarbazol, du N-iso-propylcarbazol sont employés en tant que substrat avec un système conjugué π étendu.

5. Système selon l'une des revendications précédentes, **caractérisé en ce que** le substrat avec un système conjugué π étendu est au moins partiellement hydrogéné dans le premier réacteur chimique (3) à une température entre 50 et 180 °C et une pression entre 2 et 200 bar en présence d'un catalyseur approprié.

6. Système selon l'une des revendications précédentes, **caractérisé en ce que** l'au moins une pile à combustible (6) est une pile à combustible à membrane électrolyte polymère (PEM) fonctionnant à basse température.

7. Procédé pour alimenter un bâtiment en énergie, moyennant l'emploi d'un système selon l'une des revendications précédentes, comprenant les étapes
- de mise à disposition d'un courant électrique à partir d'au moins une source d'énergie (1) renouvelable,
- de fabrication d'hydrogène à partir d'eau dans au moins un électrolyseur (2), moyennant l'emploi du courant électrique provenant de l'au moins une source d'énergie (1) renouvelable,
- de transfert de l'hydrogène formé à partir de l'au moins un électrolyseur (2) dans un premier réacteur chimique (3) contenant au moins un substrat avec un système conjugué π étendu et d'une hydrogénation au moins partielle du substrat,
- de transfert du substrat au moins partiellement hydrogéné à partir du premier réacteur chimique (3) dans au moins un réservoir de stockage (4) et éventuellement de stockage du substrat au moins partiellement hydrogéné dans le réservoir de stockage (4),
- de transfert du substrat au moins partiellement hydrogéné à partir du réservoir de stockage (4) dans au moins un deuxième réacteur chimique (5) et déshydrogénation du substrat au moins partiellement hydrogéné dans le deuxième réacteur chimique (5) avec libération d'hydrogène,
- de transfert de l'hydrogène à partir du deuxième réacteur chimique (5) dans au moins une pile à combustible (6) et d'oxydation de l'hydrogène avec l'oxygène présent dans la pile à combustible en eau avec une libération simultanée d'énergie sous forme de courant électrique et de chaleur,
- d'introduction de la chaleur générée par l'hydrogénation au moins partielle de l'au moins un substrat avec un système conjugué π étendu dans le premier réacteur chimique (3) dans le système de chauffage (7) du bâtiment, et/ou d'emploi de la chaleur nécessaire pour la déshydrogénation dans le deuxième réacteur chimique (5) à partir du système de chauffage (7) du bâtiment,
- l'eau formée dans la pile à combustible (6) pendant l'oxydation de l'hydrogène étant transférée dans l'électrolyseur (2).

8. Procédé selon la revendication 7, **caractérisé en ce que** l'hydrogène généré dans l'électrolyseur est employé sans stockage intermédiaire pour l'hydrogénation au moins partielle d'un substrat avec un système conjugué π étendu dans le premier réacteur chimique (3).

9. Procédé selon l'une des revendications 7 et 8, **caractérisé en ce que** le substrat déshydrogéné dans le deuxième réacteur chimique (5) est recyclé à partir du deuxième réacteur chimique (5) vers l'électrolyseur (2) par l'intermédiaire du réservoir de stockage (4).

10. Procédé selon l'une des revendications 7 à 9, **caractérisé en ce que** le courant électrique libéré dans la pile à combustible (6) est alimenté dans le réseau électrique (8) du bâtiment ou dans un réseau électrique (9) externe.

11. Procédé selon l'une des revendications 7 à 10, **caractérisé en ce que** l'oxygène nécessaire à l'oxydation de l'hydrogène dans la pile à combustible (6) est alimenté dans la pile à combustible de l'extérieur sous la forme d'air.

12. Procédé selon l'une des revendications 7 à 11, **caractérisé en ce qu'**en cas de besoin, du courant électrique supplémentaire est alimenté dans le réseau électrique (8) du bâtiment par une autre source d'énergie (9).

13. Procédé selon l'une des revendications 7 à 11, **caractérisé en ce qu'**en cas de besoin, du courant électrique supplémentaire peut être recyclé à partir de la pile à combustible (6) dans le réseau électrique (8) externe.
